# EUROPÄISCHE PATENTSCHRIFT

(11) **EP 2 751 294 B1**
(45) Veröffentlichungstag und Bekanntmachung des Hinweises auf die Patenterteilung: **02.08.2017**
(21) Anmeldenummer: 12753687.8
(22) Anmeldetag: 22.08.2012
(51) Int. Cl.: C01B 3/12, C21B 13/00, C21B 13/14

(54) **VERFAHREN ZUR AUFBEREITUNG VON ABGASEN AUS ANLAGEN ZUR ROHEISENHERSTELLUNG**
METHOD FOR TREATING WASTE GASES FROM PLANTS FOR PIG IRON PRODUCTION
PROCÉDÉ DE TRAITEMENT DES FUMÉES PRODUITES PAR DES INSTALLATIONS DE FABRICATION DE FONTE BRUTE

(30) Priorität: 31.08.2011 AT 12452011
(43) Veröffentlichungstag der Anmeldung: 09.07.2014
(73) Patentinhaber: Primetals Technologies Austria GmbH, 4031 Linz (AT)
(72) Erfinder: MILLNER, Robert, A-3382 Loosdorf (AT); ROSENFELLNER, Gerald, A-3352 Ertl (AT)
(74) Vertreter: Metals@Linz
(86) Internationale Anmeldenummer: PCT/EP2012/066319
(87) Internationale Veröffentlichungsnummer: WO 2013/030057

(56) Entgegenhaltungen:
- EP-A1- 1 146 009
- EP-A2- 0 934 904
- WO-A1-2004/083343
- WO-A1-2010/057767
- US-A- 5 676 732

## Beschreibung

### GEBIET DER ERFINDUNG

Die Erfindung betrifft ein Verfahren und eine Vorrichtung zur Aufbereitung von Abgasen aus Anlagen zur Roheisenherstellung, wobei ein erster Teilstrom des Abgases nach Zugabe von Wasser und/oder Wasserdampf einer zumindest teilweisen Umwandlung von CO in CO₂ unterworfen wird und das Abgas anschließend einer CO₂-Abscheidung unterworfen wird, wobei ein weiterer Teilstrom des Abgases keiner Umwandlung von CO in CO₂ unterworfen wird, sondern separat vom ersten Teilstrom einer CO₂-Abscheidung unterworfen wird.

### STAND DER TECHNIK

Zur Herstellung von Roheisen, womit auch die Herstellung roheisenähnlicher Produkte umfasst sein soll, gibt es im Wesentlichen zwei bekannte gängige Verfahren: das Hochofenverfahren und die Schmelzreduktion.

Beim Hochofenverfahren wird zuerst Roheisen aus Eisenerz mit Hilfe von Koks hergestellt. Außerdem kann zusätzlich Schrott eingesetzt werden. Danach wird durch weitere Verfahren aus Roheisen Stahl hergestellt. Das Eisenerz wird als Stückerz, Pellets oder Sinter zusammen mit den Reduktionsmitteln (meist Koks, oder auch Kohle, z.B. in Form einer Feinkohleeindüsanlage) und weiteren Bestandteilen (Kalkstein, Schlackenbildner, usw.) zum sogenannten Möller vermischt und anschließend in den Hochofen chargiert. Der Hochofen ist ein metallurgischer Reaktor, in dem im Gegenstrom die Möllersäule mit heißer Luft, dem sogenannten Heißwind, reagiert. Durch Verbrennen des Kohlenstoffs aus dem Koks entstehen die für die Reaktion nötige Wärme und Kohlenmonoxid bzw. Wasserstoff, die einen wesentlichen Teil des Reduktionsgases darstellen, wobei das Reduktionsgas die Möllersäule durchströmt und das Eisenerz reduziert. Als Ergebnis entstehen Roheisen und Schlacke, die periodisch abgestochen werden.

Im sogenannten Sauerstoffhochofen, welcher auch als Hochofen mit Top- oder Gichtgasrückführung bezeichnet wird, wird bei der Vergasung von Koks bzw. Kohle sauerstoffhältiges Gas mit mehr als 90 vol% Sauerstoffanteil (O₂) in den Hochofen eingeblasen.

Für das aus dem Hochofen austretende Gas, das sogenannte Top- oder Gichtgas, muss eine Gasreinigung vorgesehen werden (z.B. Staubabscheider und/oder Zyklone in Kombination mit Nasswäschern, Schlauchfiltereinheiten oder Heißgasfiltern). Weiters wird beim Sauerstoffhochofen meist ein Kompressor, vorzugsweise mit Nachkühler, für das in den Hochofen zurückgeführte Topgas vorgesehen sowie eine Vorrichtung zur CO₂-Entfernung, nach dem Stand der Technik meist mittels Druckwechsel-Adsorption.

Weitere Optionen für die Ausgestaltung eines Sauerstoff-Hochofenverfahrens sind ein Erhitzer für das Reduktionsgas und/oder eine Brennkammer für die teilweise Verbrennung mit Sauerstoff.

Die Nachteile des Hochofens sind die Anforderungen an die Einsatzmaterialien und der hohe Ausstoß an Kohlendioxid. Der eingesetzte Eisenträger und der Koks müssen stückig und hart sein, sodass genügend Hohlräume in der Möllersäule bestehen bleiben, die das Durchströmen durch den eingeblasenen Wind gewährleisten. Der CO₂-Ausstoß stellt eine starke Umweltbelastung dar. Deshalb gibt es Bestrebungen, die Hochofenroute abzulösen. Zu nennen sind hier die Eisenschwammherstellung auf Basis von Erdgas (MIDREX, HYL, FINMET®) sowie die Schmelzreduktionsverfahren (COREX®- und FINEX®-Verfahren).

Bei der Schmelzreduktion kommt ein Einschmelzvergaser zum Einsatz, in dem heißes flüssiges Metall hergestellt wird, sowie zumindest ein Reduktionsreaktor, in dem der Träger des Eisenerzes (Stückerz, Feinerz, Pellets, Sinter) mit Reduktionsgas reduziert wird, wobei das Reduktionsgas im Einschmelzvergaser durch Vergasung von Kohle (und gegebenenfalls eines kleinen Anteils von Koks) mit Sauerstoff (90% oder mehr) erzeugt wird.

Auch beim Schmelzreduktionsverfahren sind in der Regel
- Gasreinigungsanlagen (einerseits für das Topgas aus dem Reduktionsreaktor, andererseits für das Reduktionsgas aus dem Einschmelzvergaser),
- ein Kompressor, vorzugsweise mit Nachkühler, für das in den Reduktionsreaktor zurückgeführte Reduktionsgas,
- eine Vorrichtung zur CO₂-Entfernung, nach dem Stand der Technik meist mittels Druckwechsel-Adsorption
- sowie optional ein Erhitzer für das Reduktionsgas und/oder eine Brennkammer für die teilweise Verbrennung mit Sauerstoff vorgesehen.

### Der COREX®-Prozess ist ein zweistufiges

Schmelzreduktionsverfahren (engl.: smelting reduction). Die Schmelzreduktion kombiniert den Prozess der indirekten Reduktion (Vorreduktion von Eisen zu Eisenschwamm, oftmals auch Direktreduktion bezeichnet) mit einem Schmelzprozess (Hauptreduktion).

Das ebenfalls bekannte FINEX®-Verfahren entspricht im Wesentlichen dem COREX®-Verfahren, allerdings wird Eisenerz als Feinerz eingebracht und in mehreren hintereinander folgenden Wirbelschichtreaktoren vorreduziert.

Zur Abscheidung von CO₂ aus den Abgasen der Roheisenherstellung wird vornehmlich die
Druckwechseladsorption (engl.: PSA - Pressure Swing Adsorption), insbesondere auch die Vakuum-Druckwechseladsorption (engl.: VPSA - Vacuum Pressure Swing Adsorption) verwendet. Die Druckwechseladsorption ist ein physikalisches Verfahren zur selektiven Zerlegung von Gasgemischen unter Druck. Sie gehört zum Stand der Technik und muss hier deshalb nicht weiter erläutert werden. Selbstverständlich können bei der gegenständlichen Erfindung auch andere chemische oder physikalische Verfahren zur CO₂-Abscheidung zur Anwendung kommen.

Der Produktgasstrom aus der CO₂-Abscheidung, der die Wertstoffe enthält, kann wieder der Roheisenherstellung zugeführt werden. Er enthält nach der Druckwechseladsorption von Abgasen aus der Roheisenerzeugung noch etwa 2-6 vol% CO₂ und setzt sich in typischer Weise wie folgt zusammen:

| Verbindung | vol% bei PSA |
|---|---|
| H₂ | 42 |
| N₂ | 10 |
| CO | 45 |
| CO₂ | 1 |
| CH₄ | 2 |
| H₂O | 0 |

Der Restgasstrom (engl. tail gas) aus der CO₂-Abscheidung enthält noch verhältnismäßig hohe reduzierende Gasbestandteile (etwa CO, H₂), die auch wieder für die Roheisenerzeugung verwendet werden können, und setzt sich bei Abgasen aus der Roheisenerzeugung nach einer (V)PSA Anlage in typischer Weise wie folgt zusammen:

| Verbindung | vol% bei VPSA | vol% bei PSA |
|---|---|---|
| H₂ | 2, 2 | 5,5 |
| N₂ | 1,5 | 2,4 |
| CO | 10,9 | 16,8 |
| CO₂ | 82,1 | 72,2 |
| CH₄ | 0,7 | 0,9 |
| H₂O | 2, 6 | 2,2 |

Das Restgas kann oft nicht einfach thermisch verwertet werden, weil es - aufgrund des niedrigen und/oder schwankenden Heizwerts von etwa ±50% - dazu mit anderen Brennstoffen angereichert werden müsste. Man kann es etwa zur Gänze dem sogenannten Exportgas zumischen, das ist jener Teil des Prozessgases, das aus dem Prozess der Roheisenerzeugung abgezogen und für andere Zwecke verwendet wird, etwa als Brennstoff in einem kombinierten Gas- und Dampfkraftwerk, das auch als Kombikraftwerk (engl.: combined cycle power plant, kurz CCPP) bezeichnet wird. Bestandteile des Exportgases können sein:
- Topgas aus einem Hochofen, einem Reduktionsreaktor, der als Wirbelschichtreaktor oder als Reduktionsschacht (Festbettreaktor) ausgebildet ist
- sogenanntes Offgas aus einem Reduktionsreaktor (Wirbelschichtreaktor)
- sogenanntes Überschussgas (engl. excess gas) aus einem Einschmelzvergaser

Um den Wasserstoffanteil im Abgasstrom der Roheisenherstellung bzw. im Produktgasstrom nach der CO₂-Abscheidung im Verhältnis zum Gehalt an Kohlenmonoxid (CO) zu erhöhen, und dadurch die Verwendung des Abgases bzw. des Produktgases davon als Reduktionsgas zu ermöglichen, wird in der US 5,676,732 A sowie in der WO 2009/082123 A2 vorgeschlagen, zusätzlich zur CO₂-Abscheidung eine CO-Konvertierung mittels eines sogenannten Wassergas-Shift-Reaktors (WGSR, water gas shift reactor) durchzuführen. Dort läuft die sogenannte Wassergas-Shift-Reaktion ab, bei der CO durch Zugabe von Wasser(dampf) zu freiem Wasserstoff H₂ und CO₂ umgewandelt wird. Sie ist eine exotherme Reaktion und stellt ein Verfahren zur Verringerung des CO-Anteils im Gas und zur Erzeugung von Wasserstoff dar. Mit Hilfe von Katalysatoren kann die Reaktion beschleunigt werden.

Dabei wird bei der US 5,676,732 A das gesamte Exportgas aus einem Reduktionsschacht, etwa einer COREX®-Anlage, einer Umwandlung von CO in Kohlendioxid CO₂ unterworfen. Dies hat den Nachteil, dass dafür hohe Mengen an Dampf aufgrund des notwendigen Wasserdampfüberschusses erforderlich sind, etwa 300 t/h im Falle einer COREX®-Anlage. Der hohe Wasserstoffgehalt führt zu einer Begrenzung der Roheisenproduktivität und erfordert zudem hohe Reduktionsgastemperaturen.

Die WO 2010/057767 A1 zeigt eine Anlage zur Roheisenherstellung, wo ein Teil des Abgases einem Umwandlungsreaktor sowie anschließend einer CO₂-Abscheideanlage zugeführt wird. Ein weiterer Teil des Abgases aus der Anlage zur Roheisenherstellung wird in eine zweite CO₂-Abscheideanlage geführt, das Tailgas daraus wird einem Gasbehälter zugeführt.

Gemäß der WO 2009/08123 A2 wird nur ein Teil des Abgases aus den Reduktionsreaktoren einer Umwandlung von CO in CO₂ unterworfen, nämlich jener, der in das Reduktionsgas nach dem Einschmelzvergaser 10 rückgeführt wird, während ein anderer Teil des Abgases aus den Reduktionsreaktoren ohne Umwandlung von CO in Kohlendioxid CO₂ als Exportgas aus der Roheisenherstellung abgezogen wird.

Auch in der AT 507 713 B1, wo das Abgas aus Schmelzreduktionsanlagen (COREX®, FINEX®) und Sauerstoffhochöfen aufbereitet wird, wird nur ein Teil des Abgases aus den Reduktionsreaktoren einer Umwandlung von CO in CO₂ unterworfen, nämlich jener, der in den Sauerstoffhochofen oder in das Reduktionsgas nach dem Einschmelzvergaser als Reduktionsgas rückgeführt wird.

Für andere Verwendungen des Abgases aus den Reduktionsreaktoren, etwa für eine Direktreduktionsanlage, wäre wieder ein Abgas mit einem höheren Kohlenstoffgehalt notwendig, jedoch kann nach den Verfahren der WO 2009/08123 A2 und der AT 507 713 B1 zu einem bestimmten Zeitpunkt nur ein Abgas mit einem bestimmten H₂/CO-Verhältnis hergestellt werden.

Es ist daher eine Aufgabe der Erfindung, ein Verfahren zur Verfügung zu stellen, mit welchem das Abgas aus Anlagen zur Roheisenherstellung zu einem bestimmten Zeitpunkt mit unterschiedlichem H₂/CO-Verhältnis zur Verfügung gestellt werden kann.

### DARSTELLUNG DER ERFINDUNG

Die Aufgabe wird durch ein Verfahren nach Anspruch 1 gelöst, indem das Produktgas nach der CO₂-Abscheidung im zweiten Teilstrom teilweise zur Aufkohlung und Regelung des Kohlenstoffgehalts im Produkt einer Direktreduktionsanlage verwendet wird, indem das Produktgas in den Kühlgaskreislauf oder oberhalb der Kühlzone, vorzugsweise in die Übergangszone, des Reduktionsreaktors eingebracht wird, wobei die Produktgase nach der jeweiligen CO₂-Abscheidung im ersten und zweiten Teilstrom zur Einstellung eines bestimmten Verhältnisses von Wasserstoff zu CO, nämlich von einem Verhältnis zwischen 1,5 und 4,5, miteinander vermischt werden, indem ein Teil des Produktgases nach der CO₂-Abscheidung im zweiten Teilstrom dem Produktgas nach der CO₂-Abscheidung im ersten Teilstrom zugemischt wird und das Produktgas anschließend - nach Aufheizung in einem Reduktionsgasofen - als Reduktionsgas in den Reduktionsschacht der Direktreduktionsanlage geleitet wird.

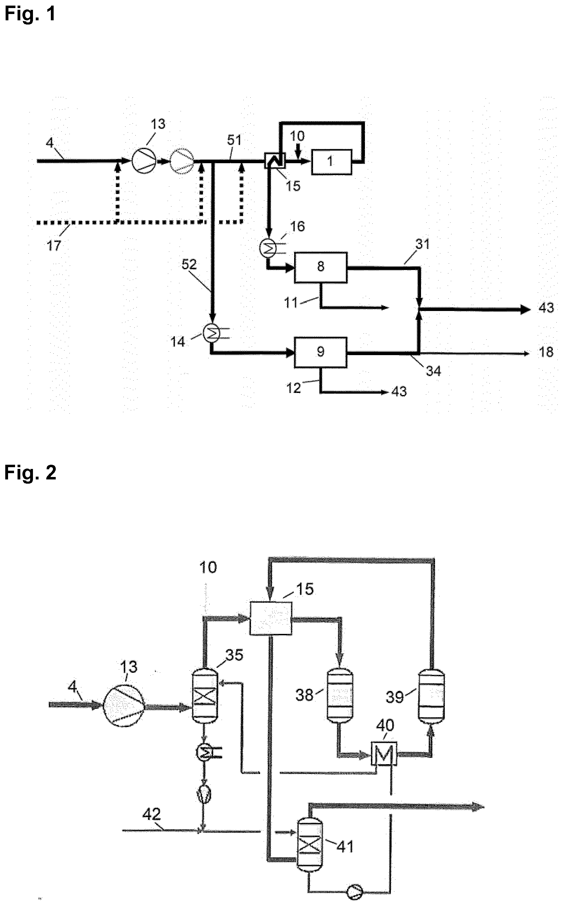

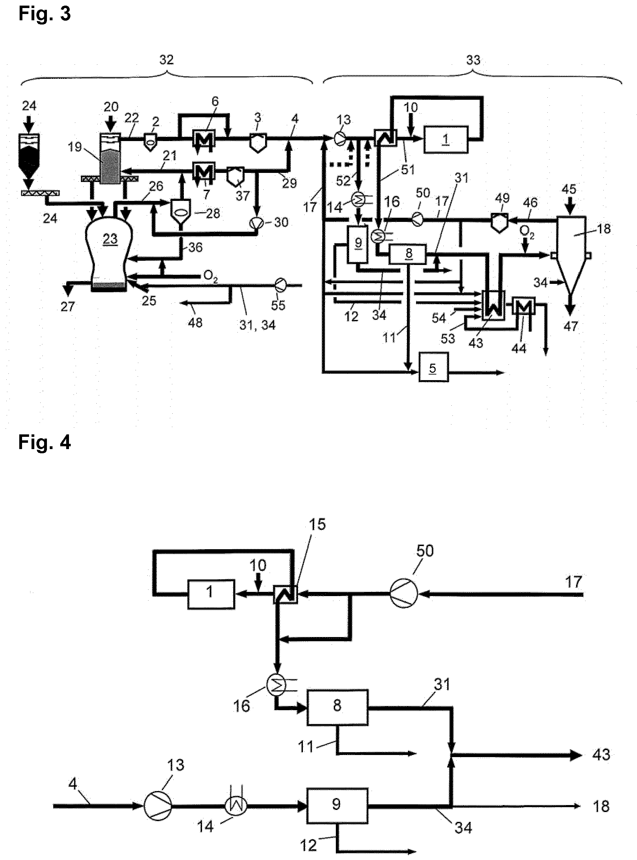

Erster und zweiter Teilstrom können dabei entweder aus der gleichen Quelle stammen und somit gleiche Zusammensetzung haben, siehe etwa Fig. 1, oder aus verschiedenen Quellen stammen und daher in der Regel verschiedene Zusammensetzungen aufweisen, siehe etwa Fig. 4. Sowohl der erste als auch der zweite Teilstrom können nur Abgas aus Anlagen zur Roheisenherstellung enthalten.

Die Produktgase nach der jeweiligen CO₂-Abscheidung im ersten und zweiten Teilstrom werden zur Einstellung eines bestimmten Verhältnisses von Wasserstoff zu CO miteinander vermischt, indem ein Teil des Produktgases nach der CO₂-Abscheidung im zweiten Teilstrom dem Produktgas nach der CO₂-Abscheidung im ersten Teilstrom zugemischt wird und das Produktgas anschließend als Reduktionsgas in den Reduktionsschacht der Direktreduktionsanlage geleitet wird.

Das Abgas des ersten Teilstroms nach der Umwandlung von CO in CO₂ ist wasserstoffreicher als jenes des zweiten Teilstroms, das ja keiner Umwandlung von CO in CO₂ unterliegt. Folglich ist das Produktgas nach der CO₂-Abscheidung des ersten Teilstroms wasserstoffreicher als jenes nach der CO₂-Abscheidung des zweiten Teilstroms. Das Produktgas aus dem zweiten Teilstrom wird daher - abgesehen von der Anwendung zur Reduktion im Hochofen- oder Schmelzreduktionsverfahren - auch zur Aufkohlung und Regelung des Kohlenstoffgehalts in einer Direktreduktionsanlage verwendet, nämlich zur Aufkohlung und Regelung des Kohlenstoffgehalts im Produkt (DRI - direct reduced iron, HBI hot briquetted iron, LRI - low reduced iron) der Direktreduktionsanlage. Dazu wird das Produktgas in den Kühlgaskreislauf oder oberhalb der Kühlzone, vorzugsweise in die sogenannte Übergangszone zwischen Reduktionszone und Kühlzone, des Reduktionsreaktors, also etwa den Reduktionsschacht der Direktreduktionsanlage, eingebracht.

Andererseits kann das Rest- oder Tailgas nach der CO₂-Abscheidung im ersten Teilstrom aufgrund des niedrigen Heizwerts kaum allein und ohne zusätzliche Vorwärmung verbrannt werden. Es wird daher am besten dem übrigen Exportgas zugegeben. Das Rest- oder Tailgas nach der CO₂-Abscheidung im zweiten Teilstrom kann aufgrund des - im Vergleich zum Restgas des ersten Teilstroms - höheren Heizwerts zur Verbrennung, etwa im Reduktionsgasofen einer Direktreduktionsanlage, verwendet werden.

Es kann auch vorgesehen werden, dass das Restgas nach der CO₂-Abscheidung im ersten Teilstrom und das Restgas nach der CO₂-Abscheidung im zweiten Teilstrom miteinander vermischt werden, etwa, um den Heizwert des Restgases z.B. für eine thermische Verwertung einzustellen.

Als Abgas einer Anlage zur Roheisenherstellung wird bei dieser Erfindung das Abgas aus einem Hochofen, insbesondere eines Sauerstoffhochofens, aus einer Schmelzreduktionsanlage, wie einer COREX®- oder FINEX®-Anlage, oder aus einer Direktreduktionsanlage, insbesondere einer Direktreduktions-Verbundanlage bestehend aus COREX®-Anlage und Direktreduktionsanlage, herangezogen.

Folglich enthält das Abgas zumindest eines der folgenden Gase:
- Topgas aus einem Hochofen, insbesondere aus einem Sauerstoffhochofen mit Topgasrückführung, oder eines Reduktionsschachts einer Schmelzreduktionsanlage
- Abgas aus einem Einschmelzvergaser einer Schmelzreduktionsanlage, welches auch als Überschussgas bezeichnet wird,
- Abgas aus zumindest einem Wirbelschichtreaktor, welches auch als Offgas bezeichnet wird,
- Abgas aus zumindest einem Festbettreaktor zur Vorwärmung und/oder Reduktion von Eisenoxiden und/oder Eisenbriketts einer Schmelzreduktionsanlage, welches auch als Topgas bezeichnet wird,
- Abgas einer der Anlage zur Roheisenherstellung zugeordneten CO₂-Abscheideanlage,
- Abgas aus zumindest einem Reduktionsreaktor einer Direktreduktionsanlage.

In einer Direktreduktionsanlage werden stückige Eisenerzträger (Stückerz, Feinerz oder Pellets (feinkörniges Eisenerz wird mit Wasser, Bindemitteln und Zuschlagstoffen zu Grünpellets gerollt und in einem abschließenden Brennvorgang gehärtet)) im festen Zustand bei 750-1000°C durch Reduktionsgas oder Kohle reduziert. Dabei entsteht direkt reduziertes Eisen (englisch: direct reduced iron, kurz DRI), das auch als Eisenschwamm bezeichnet wird.
Die Direktreduktionsanlage enthält als Herzstück einen Reduktionsreaktor, der entweder als Reduktionsschacht im Sinne eines Festbettreaktors oder in Form von Wirbelschichtreaktoren ausgebildet ist, in den bzw. in die das stückige Eisenerz und das Reduktionsgas (oder die Kohle) eingebracht werden.

Eine Direktreduktionsanlage kann aber auch Eisenbriketts erzeugen, wobei die heißen reduzierten Oxidmaterialien mittels Heißbrikettierung zu größeren Einheiten agglomeriert werden (englisch: hot briqueted iron, kurz HBI oder hot compacted iron, kurz HCI). Auch sogenanntes niedrig reduziertes Eisen (englisch: low reduced iron, kurz LRI) kann bei entsprechender Verfahrensführung aus dem Reduktionsschacht abgezogen werden.

Eine Ausführungsform der Erfindung sieht vor, dass der erste Teilstrom ausschließlich Topgas aus einem Reduktionsreaktor einer Direktreduktionsanlage enthält. Da dieses Topgas sehr stickstoffreich ist, kann der Stickstoff im Falle einer CO₂-Abscheidung mittels Druckadsorption ebenfalls gut abgeschieden werden, um ein besonders stickstoffarmes Produktgas zu erhalten.

Der Dampf für die Umwandlung von CO in CO₂ kann sehr wirtschaftlich mit Abwärme der Anlage zur Roheisenherstellung hergestellt werden, etwa mit Abwärme aus einem Topgas, einem Offgas, aus dem Generatorgas, aus dem Rauchgas eines Reduktionsgasofens oder einer Rohstofftrocknungsanlage. Die Abwärme kann aber auch aus der Stahlerzeugung stammen, nämlich vom Konverter oder vom Lichtbogenofen. Ebenso könnte Dampf aus einem Kraftwerk verwendet werden, in welchem das Exportgas verbrannt und zur Dampf- und Stromerzeugung verwendet wird.

Ein Teil des Wasserdampfs für die Umwandlung von CO in CO₂ kann auch mit Hilfe eines Sättigers erzeugt werden.

Die erfindungsgemäße Anlage zur Durchführung des Verfahrens umfasst zumindest
- eine Anlage zur Roheisenherstellung,
- zumindest einen Umwandlungsreaktor zur Umwandlung von CO in CO₂,
- eine erste Gasleitung, mit der Abgas aus der Anlage zur Roheisenherstellung in den Umwandlungsreaktor geleitet werden kann,
- eine erste CO₂-Abscheideanlage, welche dem Umwandlungsreaktor nachgeschaltet ist,
wobei eine zweite Gasleitung für Abgas vorgesehen ist, welche in eine zweite, von der ersten unabhängige CO₂-Abscheideanlage mündet, ohne dass das Abgas zuvor einen Umwandlungsreaktor durchläuft.

So kann etwa die zweite Gasleitung von der ersten abzweigen, bevor diese den Umwandlungsreaktor erreicht. Oder es kann sich eine gemeinsame Gasleitung für das Abgas in eine erste und zweite Gasleitung aufteilen.

Die erfindungsgemäße Anlage ist dadurch gekennzeichnet, dass eine Leitung für Produktgas einer CO₂-Abscheideanlage in eine Leitung für Produktgas der anderen CO₂-Abscheideanlage mündet, um die beiden Produktgase miteinander zu vermischen, sodass ein Teil des Produktgases nach der CO₂-Abscheidung im zweiten Teilstrom dem Produktgas nach der CO₂-Abscheidung im ersten Teilstrom zugemischt und das Produktgas anschließend - nach Aufheizung in einem Reduktionsgasofen - als Reduktionsgas in den Reduktionsschacht der Direktreduktionsanlage geleitet werden kann.

Weiters ist erfindungsgemäß vorgesehen, dass eine Leitung für Produktgas der zweiten CO₂-Abscheideanlage so in eine Direktreduktionsanlage mündet, dass das Produktgas dort zur Aufkohlung und Regelung des Kohlenstoffgehalts verwendet werden kann. Es ist aber nicht ausgeschlossen, dass auch das gemischte Produktgas der beiden CO₂-Abscheideanlagen so verwendet wird.

Erfindungsgemäß mündet eine Leitung für Produktgas der zweiten CO₂-Abscheideanlage so in einen Reduktionsreaktor einer Direktreduktionsanlage, dass das Produktgas in den Kühlgaskreislauf oder oberhalb der Kühlzone, vorzugsweise in die Übergangszone, des Reduktionsreaktors eingebracht werden kann. Auch diese Ausführungsform kann für gemischtes Produktgas verwendet werden.

Die Leitung für Restgas aus der zweiten CO₂-Abscheideanlage kann in einen Reduktionsgasofen einer Direktreduktionsanlage münden und dort als Brenngas genutzt werden.

Um die beiden Restgasströme zu vermischen, kann vorgesehen sein, dass eine Leitung für Restgas einer CO₂-Abscheideanlage in eine Leitung für Restgas der anderen CO₂-Abscheideanlage mündet.

Eine bereits im Zusammenhang mit dem Verfahren angeführte Ausführungsform setzt voraus, dass die erste Gasleitung so mit einer Direktreduktionsanlage verbunden ist, dass die erste Gasleitung ausschließlich mit Topgas aus einem Reduktionsreaktor einer Direktreduktionsanlage versorgt werden kann.

Im Falle der Verwendung von Abgasen aus der Roheisenherstellung ist vorgesehen, dass die erste und/oder zweite Gasleitung so mit Anlagen zur Roheisenherstellung verbunden sind, dass die Gasleitungen zumindest eines der folgenden Gase enthalten können:
- Topgas aus einem Hochofen, insbesondere aus einem Sauerstoffhochofen mit Topgasrückführung, oder eines Reduktionsschachts einer Schmelzreduktionsanlage
- Abgas aus einem Einschmelzvergaser einer Schmelzreduktionsanlage,
- Abgas aus zumindest einem Wirbelschichtreaktor,
- Abgas aus zumindest einem Festbettreaktor zur Vorwärmung und/oder Reduktion von Eisenoxiden und/oder Eisenbriketts einer Schmelzreduktionsanlage (wie im FINEX®-Verfahren vorgesehen),
- gegebenenfalls Abgas aus einer CO₂-Abscheideanlage, bevorzugter Weise einer PSA-Anlage, welche der Anlage zur Roheisenherstellung (Sauerstoffhochofen, FINEX®, COREX®) zuzurechnen ist,
- Abgas aus zumindest einem Reduktionsreaktor einer Direktreduktionsanlage.

Zur Versorgung des Umwandlungsreaktors mit Dampf kann vorgesehen sein, dass eine Dampfleitung eines Abhitzedampferzeugers der Anlage zur Roheisenherstellung in die Leitung vor oder direkt in den Umwandlungsreaktor mündet, oder, dass ein Sättiger, der das Abgas kühlt, vor dem Umwandlungsreaktor angeordnet ist.

Neben den bereits bekannten Vorteilen einer Umwandlung von CO in CO₂ wie etwa dass
- die Reduktionsreaktoren (Hochofen, Wirbelschichtreaktoren, Reduktionsschächte) kleiner dimensioniert werden können, weil das Reduktionsgas durch den hohen Wasserstoffgehalt besser ausgenutzt wird und eine niedrigere Dichte aufweist,
- die Erhöhung der Ausbeute einer (V)PSA-Anlage um 5-10% (H₂ + CO) bzw. Erzielung einer gleichen Ausbeute wie mit einer VPSA-Anlage erreicht werden kann, wenn eine PSA-Anlage mit Umwandlungsreaktor verwendet wird, in welchem Fall die Vakuumpumpen eingespart werden können,
- eine Verringerung der Gefahr der sogenannten "Metal Dusting" Korrosion aufgrund des größeren H₂/CO-Verhältnisses ermöglicht wird,
können mit dem erfindungsgemäßen Verfahren bzw. der erfindungsgemäßen Vorrichtung die folgenden Vorteile erzielt werden:
- ein höherer Metallisierungsgrad und/oder Kohlenstoffgehalt im Direktreduktionsreaktor ist möglich aufgrund der Zugabe von Produktgas zur Kühlzone des Direktreduktionsreaktors. Bei gleichem Anteil an Oxidantien im Reduktionsgas ist eine höhere Reduktionsgastemperatur möglich.
- H₂/CO-Verhältnis des als Reduktionsgas verwendeten Produktgases kann eingestellt werden
- Abscheidung eines Großteils des Stickstoffs mit (V)PSA möglich durch selektiveren Betrieb der (V)PSA nach CO-Konvertierung, wenn Rückführgas aus Direktreduktion umgewandelt wird,
- Temperatur in der Reduktionszone kann eingestellt werden aufgrund der Einstellung des H₂/CO Verhältnisses und somit Einstellung des Verhältnisses der überwiegend endothermen H₂ Reduktionsreaktionen zu den überwiegend exothermen CO Reduktionsreaktionen.

### KURZE BESCHREIBUNG DER FIGUREN

Die Erfindung wird im Folgenden anhand der beispielhaften und schematischen Figuren näher erläutert.
Fig. 1 zeigt eine erfindungsgemäße erste Ausführungsform eines Umwandlungsreaktors mit zwei CO₂-Abscheideanlagen,
Fig. 2 zeigt eine Anordnung für einen Umwandlungsreaktor und einen Sättiger,
Fig. 3 zeigt eine erfindungsgemäße Anlage nach der ersten Ausführungsform umfassend eine COREX®-Anlage und eine Direktreduktionsanlage,
Fig. 4 zeigt eine erfindungsgemäße zweite Ausführungsform eines Umwandlungsreaktors mit zwei CO₂-Abscheideanlagen.

### WEGE ZUR AUSFÜHRUNG DER ERFINDUNG

In Fig. 1 ist ein Umwandlungsreaktor 1 mit zwei CO₂-Abscheideanlagen 8, 9 in einer ersten Ausführungsform dargestellt. Exportgas 4, in Form von Abgas aus der Roheisenherstellung wird mit einem Exportgaskompressor 13, in einer oder - strichliert dargestellt - mehreren Stufen komprimiert. Nach dem Exportgaskompressor 13 wird ein erster Teilstrom 51 zu seiner Erwärmung durch einen Wärmetauscher 15 geführt und nach Zugabe von Niederdruckdampf 10 kurz vor oder im Umwandlungsreaktor 1 diesem zugeführt. Das derart modifizierte und durch die chemische Reaktion erwärmte Exportgas wird als Wärmeträgermedium erneut durch den Wärmetauscher 15 geführt und dabei durch frisches Exportgas aus dem ersten Teilstrom 51 abgekühlt. Eine weitere Abkühlung erfolgt in einem Kühler 16, bevor es in die erste CO₂-Abscheideanlage 8 gelangt.

Ein zweiter Teilstrom 52 wird, nach dem Exportgaskompressor 13, aber vor dem Wärmetauscher 15, vom Exportgas 4 abgezweigt und lediglich über einen Kühler 14 - keinesfalls über einen Umwandlungsreaktor - der zweiten CO₂-Abscheideanlage 9 zugeführt. Das Produktgas 34 dieser zweiten CO₂-Abscheideanlage 9 kann ganz oder teilweise der Kühlzone eines Reduktionsschachts 18 einer Direktreduktionsanlage 33 zugeführt oder ganz oder teilweise mit dem Produktgas 31 vermischt und dem Reduktionsgasofen 43 als Brennstoff zugeführt werden. Das Restgas 12 gelangt als Brenngas in den Reduktionsgasofen 43 der Direktreduktionsanlage 33, siehe Fig. 3.

Das Produktgas 31 aus der ersten CO₂-Abscheideanlage 8 wird zur Gänze als Reduktionsgas dem Reduktionsgasofen 43 zu dessen Aufheizung zugeleitet. Das Restgas 11 aus der ersten CO₂-Abscheideanlage 8 wird zur Gänze dem übrigen Exportgas im Exportgasbehälter 5 zugemischt, welches nicht mehr in die Direktreduktionsanlage 33 oder die Anlage zur Roheisenherstellung zurückgeführt wird, sondern meist zur Rohstofftrocknung im Hüttenwerk verwendet wird.

Die einzelnen Prozessgase weisen nach einer COREX®-Anlage und zwei Anlagen zur Druckwechseladsorption (PSA-Anlagen) etwa die folgenden Eigenschaften auf:

| Gas: | Temp. (°C) | H₂ (vol%) | CO (vol%) | CO₂ (vol%) |
|---|---|---|---|---|
| Teilstrom 51 vor Wärmetauscher 15 | 100-200 | 30 | 36 | 23 |
| Produktgas 31 | 40 | 81 | 5 | 3 |
| Restgas 11 | 40 | 12 | 2 | 82 |
| Produktgas 34 | 40 | 42 | 45 | 1 |
| Restgas 12 | 40 | 10 | 21 | 59 |

Durch Mischung der beiden Produktgase 31, 34 kann nun der gewünschte CO-Gehalt für die nachfolgende Anwendung der Produktgase als Reduktionsgas eingestellt werden. Für einen Reduktionsschacht 18 einer Direktreduktionsanlage 33 soll das Verhältnis H₂/CO zwischen 1,5 und 4,5 liegen, da dort ein Produktivitätsoptimum erreicht werden kann. Es ist aber auch der Druckverlust über den Reduktionsschacht oder eines anderes Reduktionsaggregates zu berücksichtigen. Ist das Verhältnis H₂/CO zu niedrig, kommt es aufgrund des zu hohen Druckverlustes über den Reduktionsschacht 18, gemäß Fig. 3 zu einer geringeren Anlagenleistung aufgrund der hydraulischen Begrenzung. Ist das Verhältnis H₂/CO zu hoch, dann kühlt der Möller im Reduktionsschacht aufgrund der überwiegend endothermen Reaktionen zu stark ab.

Dem Exportgas 4 kann
- unmittelbar vor dem Exportgaskompressor 13,
- unmittelbar nach diesem, jedoch vor der Teilung des Exportgases in zwei Teilströme 51, 52, und/oder
- nach Abzweigung des zweiten Teilstroms 52 zur zweiten CO₂-Abscheideanlage 9, jedoch vor dem Wärmetauscher 15, sogenanntes Rückführgas 17 zugemischt werden. Rückführgas 17 ist gereinigtes Topgas 46 von einem Reduktionsschacht 18 einer Direktreduktionsanlage 33, welches teilweise wieder als Brenngas für den Reduktionsgasofen 43 der Direktreduktionsanlage 33 zurückgeführt wird, siehe Fig. 3.

In Fig. 2 ist der Anlagenteil um den Umwandlungsreaktor 1 aus Fig. 1 näher erläutert, die Abzweigung des zweiten Teilstroms 52 oder die Zugabe von Rückführgas 17 sind nicht dargestellt. Das Exportgas 4 wird im Exportgaskompressor 13 verdichtet und hat dann eine Temperatur von 100-200°C. Es gelangt in einen Sättiger 35, wo dem Exportgas 4 vorgewärmtes Wasser zugegeben wird. Durch die im Exportgas 4 enthaltene Wärme wird das Wasser verdampft, wodurch die Zugabe von weiterem Dampf reduziert werden kann.

In der Leitung vom Sättiger 35 zum Wärmetauscher 15 wird noch Niederdruckdampf 10 zugegeben, bevor das Exportgas 4 im Wärmetauscher 15 auf ca. 300-450°C erwärmt wird. Der Umwandlungsreaktor 1 aus Fig. 1 kann mehrstufig ausgeführt sein und weist hier etwa eine erste Umwandlungseinheit 38 und eine zweite Umwandlungseinheit 39 auf, zwischen denen sich ein Gaskühler 40 befindet. Während der Wassergas-Shift-Reaktion steigt die Gastemperatur um etwa 100-150°C. Alternativ kann der Umwandlungsreaktor 1 bzw. 38, 39 auch isotherm betrieben werden bei gleichzeitiger Produktion von Dampf. Das umgewandelte Exportgas wird im Wärmetauscher 15 gekühlt und kann in einem weiteren Gaskühler 41, dem Zusatzwasser 42 und/oder Wasser aus dem Sättiger 35 zugeführt wird, noch weiter gekühlt werden, falls es für die nachfolgende erste CO₂-Abscheideanlage 8 erforderlich ist. Im Gaskühler 41 kann auch der im umgewandelten Exportgas enthaltene Wasserdampf wesentlich reduziert werden.

In den CO₂-Abscheideanlagen 8, 9 wird der CO₂-Gehalt auf 0,3-10 vol% reduziert.

Fig. 3 zeigt die erfindungsgemäße Verbindung zwischen einer Anlage zur Schmelzreduktion (COREX®-Anlage 32) einerseits und einer Direktreduktionsanlage 33 andererseits.

Die COREX® Anlage 32 weist in diesem Beispiel einen Reduktionsschacht 19 auf, welcher als Festbettreaktor ausgebildet ist und mit Stückerz, Pellets, Sinter und Additiven beschickt wird, siehe Bezugszeichen 20. Im Gegenstrom zum Stückerz etc. 20 wird das Reduktionsgas 21 geführt. Es wird im unteren Teil des Reduktionsschachts 19 eingebracht und tritt an dessen Oberseite als Topgas 22 aus. Die Wärme des Topgases 22 aus dem Reduktionsschacht 19 kann in einem Abhitzekessel 6 zur Dampferzeugung genutzt, der dabei entstehende Niederdruckdampf kann dem Umwandlungsreaktor 1 zugeführt werden, siehe dort Bezugszeichen 10. Um den Abhitzekessel 6 ist eine Bypassleitung vorgesehen, sodass das Topgas 22 ohne erzwungene Abkühlung um den Abhitzekessel 6 geführt werden kann. Vor Eintritt in den Abhitzekessel 6 kann das Topgas 22 in einem Staubabscheider oder Zyklon 2, etwa in Form eines Heißgaszyklons, von Staub befreit werden. Das aus dem Abhitzekessel 6 austretende Abgas wird in einem Nasswäscher 3 weiter gereinigt und gekühlt und als Exportgas 4 wie oben beschrieben erfindungsgemäß dem Umwandlungsreaktor 1 zur Umwandlung von CO in CO₂ zugeleitet.

Das Reduktionsgas 21 für den Reduktionsschacht 19 wird in einem Einschmelzvergaser 23 hergestellt, in den einerseits Kohle in Form von stückiger Kohle bzw. Koks 24 und ggf. von Kohle in Pulverform 25 - diese gemeinsam mit Sauerstoff O₂ - zugeführt wird, in den andererseits das im Reduktionsschacht 19 vorreduzierte Eisenerz zugegeben wird. Die Kohle im Einschmelzvergaser 23 wird vergast, es entsteht ein Gasgemisch, das hauptsächlich aus CO und H₂ besteht, und als Topgas (Generatorgas) 26 abgezogen und ein Teilstrom als Reduktionsgas 21 dem Reduktionsschacht 19 zugeleitet wird. Das im Einschmelzvergaser 23 erschmolzene heiße Metall und die Schlacke werden abgezogen, siehe Pfeil 27.

Das aus dem Einschmelzvergaser 23 abgezogene Generatorgas 26 wird nach dessen Kühlung in einen Abscheider 28 (Heißgaszyklon) geleitet, um mit ausgetragenem Staub abzuscheiden und den Staub 36 über Staubbrenner in den Einschmelzvergaser 23 zurückzuführen.

Ein Teil des vom Grobstaub gereinigten Generatorgases 26 wird mittels Nasswäscher 37 weiter gereinigt und als Überschussgas 29 aus der COREX®-Anlage 32 entnommen und dem Exportgas 4 zugemischt. Vor dem Nasswäscher 37 und/oder in der Leitung für Generatorgas 26 (nicht dargestellt) kann auch ein weiterer Abhitzekessel 7 angeordnet sein, dessen Niederdruckdampf dem Umwandlungsreaktor 1 zugeführt wird.

Ein Teil des gereinigten Generatorgases 26 nach Nasswäscher 37 wird zur Abkühlung einem Kühlgaskompressor 30 zugeleitet und dann wieder dem Generatorgas 26 nach dem Einschmelzvergaser 23 zur Kühlung zugeführt. Durch diese Rückführung können die darin enthaltenen reduzierenden Anteile noch für das COREX®-Verfahren ausgenützt werden und andererseits kann die erforderliche Kühlung des heißen Top- oder Generatorgases 26 von ca. 1050°C auf 700-900°C sichergestellt werden.

Dem Umwandlungsreaktor 1 kann in diesem Ausführungsbeispiel einerseits Niederdruckdampf 10 aus den Abhitzekesseln 6, 7 der COREX®-Anlage 32 zugeführt werden. Bevorzugter Weise sollte die Abwärme aus dem Eisenerzeugungsprozess bzw. dem Direktreduktionsprozess verwendet werden wegen der kurzen Wegstrecken zwischen den Abhitzekesseln 6, 7 und dem Umwandlungsreaktor 1.

Das gereinigte Topgas 22 und ein Teil des Überschussgases 29 werden als Exportgas 4 aus der COREX®-Anlage 32 abgezogen und vor dem Umwandlungsreaktor 1 mittels eines Exportgaskompressors 13 noch verdichtet.

Wird statt der COREX®-Anlage 32 ein Sauerstoffhochofen mit Topgasrückführung verwendet, so wird an der Oberseite des Hochofens das Top- oder Gichtgas entnommen, ein Teil in den Sauerstoffhochofen zurückgeführt und ein Teil des Top- oder Gichtgases in einem Staubabscheider oder Zyklon vorgereinigt und einem Nasswäscher (oder einem Schlauchfilter bzw. Heißgasfiltersystem) nochmals gereinigt. Das so gereinigte Top- oder Gichtgas wird dann direkt als Exportgas 4 aus dem Hochofensystem entnommen und zumindest teilweise dem Umwandlungsreaktor 1 zugeführt.

Wird statt der COREX®-Anlage 32 eine FINEX®-Anlage verwendet, so wird nach dem letzten der drei bis vier Wirbelschichtreaktoren, in welchen die Vorreduktion des Feinerzes stattfindet, ein Teilstrom des Topgases als Exportgas entnommen, von Staub gereinigt und dem Umwandlungsreaktor 1 zugeführt. Dem Exportgas kann wie bei der COREX®-Anlage 32 auch ein Teil des Überschussgases aus dem Einschmelzvergaser zugegeben werden.

Das in der ersten CO₂-Abscheideanlage 8, die im Teilstrom 51 angeordnet und als PSA-Anlage ausgebildet ist, von CO₂ befreite Produktgas 31 wird anschließend in einem Reduktionsgasofen 43 erwärmt, welcher bevorzugter Weise einen Luftvorwärmer 44 aufweist. Der Luftvorwärmer 44 stellt vorgewärmte Verbrennungsluft 53 zur Verfügung. Dem Reduktionsgasofen 43 kann auch nicht vorgewärmte Luft 54 zur Verbrennung zugeführt werden. Das Abgas aus dem Reduktionsgasofen 43 gibt im Luftvorwärmer 44 einen Teil seiner Energie an die Verbrennungsluft 53 ab und wird dann in die Atmosphäre abgeleitet.

Das Produktgas 31 wird im Reduktionsgasofen 43 ggf. mit Sauerstoff O₂ partiell oxidiert und anschließend in den Reduktionsschacht 18 der Direktreduktionsanlage 33 geleitet, wo das von oben aufgegebene stückige Erz und/oder die Pellets 45 chargiert werden.

Das Topgas 46 wird anschließend in einem Nasswäscher 49 weiter gereinigt, in einem Rückführgaskompressor 50 komprimiert, bevor ein Teil dem Exportgas 4 vor dem Umwandlungsreaktor 1 zugemischt wird. Ein Teil kann aber auch über einen Exportgasbehälter 5 dem Dampfkessel einer Dampferzeugungsanlage als Brennstoff zugeführt werden oder auch zur Rohstofftrocknung (Kohle-, Feinkohle- oder Erztrocknung) verwendet werden. Ein weiterer Teil wird vor dem Rückführgaskompressor 50 abgezweigt und als Brenngas für den Reduktionsgasofen 43 verwendet.

Das Restgas 11 aus der ersten CO₂-Abscheideanlage 8 wird dem Exportgaskompressor 13 zugeführt. Das Restgas 12 aus der zweiten CO₂-Abscheideanlage 9, die bevorzugter Weise als PSA-Anlage ausgebildet ist, wird hier zur Gänze als Brenngas dem Reduktionsgasofen 43 zugeführt.

Das Produktgas 34 aus der zweiten CO₂-Abscheideanlage 9 kann teilweise der Kühlzone des Reduktionsschachts 18 der Direktreduktionsanlage 33 zugeführt werden, teilweise kann es dem Produktgas 31 der ersten CO₂-Abscheideanlage 8 zugemischt werden. Der untere, sich verjüngende Teil des Reduktionsschachtes 18 ist die Kühlzone, der zylindrische obere Teil ist die eigentliche Reduktionszone. Zwischen Kühl- und Reduktionszone liegt die Übergangszone.

Der Reduktionsschacht 18 muss nicht als Festbett, er kann auch als Wirbelschicht ausgebildet sein. Am unteren Ende werden - je nach chargierten Einsatzstoffen und je nach Verfahrensführung - entweder Eisenschwamm (DRI, direct reduced iron), heiß brikettiertes Eisen (HBI), heiß kompaktiertes Eisen (HCI) oder niedrig reduziertes Eisen (LRI low reduced iron) entnommen, siehe Bezugszeichen 47. Im Fall einer Wirbelschicht ist eine Brikettierung der reduzierten, heißen Oxidmaterialien erforderlich.

Ein Teil der Produktgase 31, 34 kann auch als Reduktionsgas dem Einschmelzvergaser 23 zugeleitet werden, wozu es aber ggf. zuvor in einem Produktgaskompressor 55 verdichtet werden muss. Es kann dann gemeinsam mit der Kohle in Pulverform 25 eingebracht werden, wobei das Produktgas als Fördermedium für die Kohle in Pulverform dient. Ein weiterer Teil 48 der Produktgase 31, 34 kann nach dem Produktgaskompressor 55 und vor dem Einschmelzvergaser 23 abgezweigt und als Stickstoffersatz im Hüttenwerk verwendet werden, und zwar dort, wo ein Stickstoffeintrag in die Prozessgase unerwünscht ist, etwa zur Kühlung von Kohlechargieraggregaten in den Einschmelzvergaser.

Falls das Abgas aus einer Anlage zur Roheisenherstellung nur trocken entstaubt wird, z.B. über keramische Filter oder über Schlauchfilter, kann die Wärme des Abgases für die Wassergas-Shift-Reaktion im Umwandlungsreaktor 1 genutzt werden. In diesem Fall erfolgt die Verdichtung erst nach dem Umwandlungsreaktor 1. Würde man also in Fig. 3 die Nasswäscher 3 und/oder 37 weglassen, dann würde der Exportgaskompressor 13 im ersten Teilstrom 51 nach dem Umwandlungsreaktor 1 und vor der ersten CO₂-Abscheideanlage 8 angeordnet sein, ein weiterer Kompressor im zweiten Teilstrom 52 vor der zweiten CO₂-Abscheideanlage 9.

In Fig. 4 ist eine Ausführungsvariante dargestellt, wo nur zumindest teilweise das Rückführgas des Reduktionsreaktors einer Direktreduktionsanlage, also etwa ein Teil des gereinigten Topgas 46 des Reduktionsschachts 18 aus Fig. 3 als Rückführgas 17, zum Umwandlungsreaktor 1 geleitet wird. Abgas (z.B. Exportgas 4) einer Schmelzreduktionsanlage oder eines Hochofens wird nicht zum Umwandlungsreaktor 1 geleitet, sondern nur der zweiten CO₂-Abscheideanlage 9 zugeführt.

Das Rückführgas 17 wird in einem Rückführgaskompressor 50 komprimiert und zumindest zum Teil durch den Wärmetauscher 15 geführt, um es zu erwärmen. Ein anderer Teil wird um den Wärmetauscher 15 geführt, um die Menge, welche einer CO Konvertierung unterworfen wird, zu regeln (Teilstromshift). Das im Wärmetauscher 15 erwärmte Rückführgas gelangt nach Zugabe von Wasser und/oder Dampf, etwa Niederdruckdampf 10, in den Umwandlungsreaktor 1 und gibt einen Teil seiner Wärme im Wärmetauscher 15 wieder an das frische Rückführgas 17 ab. Ein weiterer Teil der Wärme wird im Kühler 16 entzogen, vor dem auch das um den Wärmetauscher 15 herumgeführte Rückführgas einmündet.

Das Rückführgas 17 weist einen höheren Stickstoffanteil durch interne Anreicherung (Zugabe von N₂ im Reduktionsaggregat, Gasrecycling) auf als die anderen Prozessgasströme, also erster und zweiter Teilstrom 51, 52 aus Fig. 1 bzw. das Exportgas 4 aus er Schmelzreduktion. Es ist bekannt, dass die bei der Druckwechseladsorption auftretenden Adsorptionskräfte für verschiedene Gase verschieden stark sind. So sind sie für Wasser stärker als für CO₂, für CO₂ stärker als für CO und für CO stärker als für Stickstoff. Für Wasserstoff sind sie noch niedriger als für Stickstoff. Wird nun die erste CO₂-Abscheideanlage 8 als (Vakuum) Druckwechseladsorptionsanlage ausgebildet und diese so betrieben, dass auch der Stickstoff abgeschieden wird, so kann ein sehr stickstoffarmes Produktgas hergestellt werden, ohne dass der Wasserstoff aus dem Produktgas entfernt wird.

Das Exportgas 4 wird, wie in Fig. 1, nur in einem Exportgaskompressor 13 verdichtet, in einem Kühler 14 gekühlt und dann der zweiten CO₂-Abscheideanlage 9 zugeführt. Die Verwendung der Produktgase 31, 34 und der Restgase 11, 12 ist grundsätzlich gleich mit jener in Fig. 1.

### Bezugszeichenliste:

- 1: Umwandlungsreaktor
- 2: Staubabscheider oder Zyklon
- 3: Nasswäscher
- 4: Abgas (Exportgas)
- 5: Exportgasbehälter
- 6: Abhitzedampferzeuger in Form eines Abhitzekessels für Topgas 22
- 7: Abhitzedampferzeuger in Form eines Abhitzekessels (Nachkühler)
- 8: erste CO₂-Abscheideanlage
- 9: zweite CO₂-Abscheideanlage
- 10: Niederdruckdampf
- 11: Restgas nach erster CO₂-Abscheideanlage 8
- 12: Restgas nach zweiter CO₂-Abscheideanlage 9
- 13: Exportgaskompressor
- 14: Kühler vor zweiter CO₂-Abscheideanlage 9
- 15: Wärmetauscher
- 16: Kühler vor erster CO₂-Abscheideanlage
- 17: Rückführgas
- 18: Reduktionsreaktor (Reduktionsschacht) der Direktreduktionsanlage 33
- 19: Reduktionsschacht der COREX®-Anlage 32
- 20: Stückerz, Pellets, Sinter und Additive
- 21: Reduktionsgas
- 22: Topgas aus Reduktionsschacht 19
- 23: Einschmelzvergaser
- 24: stückige Kohle oder Koks
- 25: Kohle in Pulverform
- 26: Top- oder Generatorgas aus Einschmelzvergaser 23
- 27: heißes Metall und Schlacke
- 28: Abscheider für Feinerz
- 29: Überschussgas
- 30: Kühlgaskompressor
- 31: von CO₂ befreiten Gas (Produktgas) aus erster CO₂-Abscheideanlage 8
- 32: COREX®-Anlage
- 33: Direktreduktionsanlage
- 34: von CO₂ befreiten Gas (Produktgas) aus zweiter CO₂-Abscheideanlage 9
- 35: Sättiger
- 36: Staub aus Abscheider 28
- 37: Nasswäscher für Topgas 26
- 38: erste Umwandlungseinheit
- 39: zweite Umwandlungseinheit
- 40: Gaskühler
- 41: Gaskühler
- 42: Zusatzwasser, ev. aufbereitetes Wasser
- 43: Reduktionsgasofen
- 44: Luftvorwärmer
- 45: stückiges Erz und/oder Pellets
- 46: Topgas aus Reduktionsschacht 18
- 47: heiß brikettiertes Eisen oder niedrig reduziertes Eisen
- 48: Produktgase als Stickstoffersatz
- 49: Nasswäscher für Topgas 46
- 50: Rückführgaskompressor
- 51: erster Teilstrom des Abgases
- 52: zweiter Teilstrom des Abgases
- 53: vorgewärmte Verbrennungsluft
- 54: Luft
- 55: Produktgaskompressor

## Patentansprüche

1. Verfahren zur Aufbereitung von Abgasen (4) aus Anlagen (32, 33) zur Roheisenherstellung, wobei ein erster Teilstrom (51) des Abgases nach Zugabe von Wasser und/oder Wasserdampf einer zumindest teilweisen Umwandlung von CO in CO₂ unterworfen wird und das Abgas (4) anschließend einer Com-Abscheidung unterworfen wird, wobei ein zweiter Teilstrom (52) des Abgases keiner Umwandlung von CO in CO₂ unterworfen wird, sondern separat vom ersten Teilstrom (51) einer CO₂-Abscheidung unterworfen wird,
**dadurch gekennzeichnet, dass** das Produktgas (34) nach der CO₂-Abscheidung im zweiten Teilstrom (52) teilweise zur Aufkohlung und Regelung des Kohlenstoffgehalts im Produkt einer Direktreduktionsanlage (33) verwendet wird, indem das Produktgas (34) in den Kühlgaskreislauf oder oberhalb der Kühlzone, vorzugsweise in die Übergangszone, des Reduktionsreaktors (18) eingebracht wird,
wobei die Produktgase (31, 34) nach der jeweiligen CO₂-Abscheidung im ersten und zweiten Teilstrom (51, 52) zur Einstellung eines bestimmten Verhältnisses von Wasserstoff zu CO, nämlich von einem Verhältnis zwischen 1,5 und 4,5, miteinander vermischt werden, indem ein Teil des Produktgases (34) nach der CO₂-Abscheidung im zweiten Teilstrom (52) dem Produktgas (31) nach der CO₂-Abscheidung im ersten Teilstrom (51) zugemischt wird und das Produktgas (31) anschließend - nach Aufheizung in einem Reduktionsgasofen (43) - als Reduktionsgas in den Reduktionsschacht (18) der Direktreduktionsanlage (33) geleitet wird.

2. Verfahren nach Anspruch 1, **dadurch gekennzeichnet, dass** das Restgas (12) nach der CO₂-Abscheidung im zweiten Teilstrom (52) zur Verbrennung, etwa im Reduktionsgasofen (43) einer Direktreduktionsanlage (33), verwendet wird.

3. Verfahren nach einem der Ansprüche 1 bis 2, **dadurch gekennzeichnet, dass** das Restgas (11) nach der CO₂-Abscheidung im ersten Teilstrom (51) und das Restgas (12) nach der CO₂-Abscheidung im zweiten Teilstrom (52) miteinander vermischt werden.

4. Verfahren nach einem der Ansprüche 1 bis 3, **dadurch gekennzeichnet, dass** das Abgas (4) zumindest eines der folgenden Gase enthält:
- Topgas aus einem Hochofen, insbesondere aus einem Sauerstoffhochofen mit Topgasrückführung, oder eines Reduktionsschachts (19) einer Schmelzreduktionsanlage (32),
- Abgas (29) aus einem Einschmelzvergaser (23) einer Schmelzreduktionsanlage,
- Abgas aus zumindest einem Wirbelschichtreaktor,
- Abgas aus zumindest einem Festbettreaktor zur Vorwärmung und/oder Reduktion von Eisenoxiden und/oder Eisenbriketts einer Schmelzreduktionsanlage,
- Abgas einer der Anlage zur Roheisenherstellung zugeordneten CO₂-Abscheideanlage,
- Abgas aus zumindest einem Reduktionsreaktor (18) einer Direktreduktionsanlage (33).

5. Verfahren nach einem der Ansprüche 1 bis 3, **dadurch gekennzeichnet, dass** der erste Teilstrom (51) ausschließlich Topgas (46) aus einem Reduktionsreaktor (18) einer Direktreduktionsanlage (33) enthält.

6. Verfahren nach einem der Ansprüche 1 bis 4, **dadurch gekennzeichnet, dass** ein Teil des Dampfs für die Umwandlung von CO in CO₂ mit Abwärme der Anlage zur Roheisenherstellung (32) hergestellt wird.

7. Verfahren nach einem der Ansprüche 1 bis 4, **dadurch gekennzeichnet, dass** ein Teil des Dampfs für die Umwandlung von CO in CO₂ mit Abwärme des Abgases (4) selbst hergestellt wird.

8. Anlage zur Durchführung des Verfahrens nach einem der Ansprüche 1 bis 7, umfassend zumindest
- eine Anlage (32) zur Roheisenherstellung,
- zumindest einen Umwandlungsreaktor (1) zur Umwandlung von CO in CO₂,
- eine erste Gasleitung, mit der Abgas (4) aus der Anlage zur Roheisenherstellung in den Umwandlungsreaktor (1) geleitet werden kann,
- eine erste CO₂-Abscheideanlage (8), welche dem Umwandlungsreaktor (1) nachgeschaltet ist,
wobei eine zweite Gasleitung für Abgas vorgesehen ist, welche in eine zweite, von der ersten unabhängige CO₂-Abscheideanlage (9) mündet, ohne dass das Abgas zuvor einen Umwandlungsreaktor durchläuft, **dadurch gekennzeichnet,**
**dass** eine Leitung für Produktgas (34) der zweiten CO₂-Abscheideanlage (9) so in einen Reduktionsreaktor (18) einer Direktreduktionsanlage (33) mündet, dass das Produktgas (34) in den Kühlgaskreislauf oder oberhalb der Kühlzone, vorzugsweise in die Übergangszone, des Reduktionsreaktors eingebracht werden kann,
wobei eine Leitung für Produktgas (31) der ersten CO₂-Abscheideanlage (8) in eine Leitung für Produktgas (34) der zweiten CO₂-Abscheideanlage (9) mündet, sodass ein Teil des Produktgases (34) nach der CO₂-Abscheidung im zweiten Teilstrom (52) dem Produktgas (31) nach der CO₂-Abscheidung im ersten Teilstrom (51) zugemischt und das Produktgas (31) anschließend - nach Aufheizung in einem Reduktionsgasofen (43) - als Reduktionsgas in den Reduktionsschacht (18) der Direktreduktionsanlage (33) geleitet werden kann.

9. Anlage nach Anspruch 8, **dadurch gekennzeichnet, dass** eine Leitung für Restgas (12) aus der zweiten CO₂-Abscheideanlage (9) in einen Reduktionsgasofen (43) einer Direktreduktionsanlage (33) mündet.

10. Anlage nach einem der Ansprüche 8 bis 9, **dadurch gekennzeichnet, dass** eine Leitung für Restgas (11) einer ersten CO₂-Abscheideanlage (8) in eine Leitung für Restgas (12) der zweiten CO₂-Abscheideanlage (9) mündet.

11. Anlage nach einem der Ansprüche 8 bis 10, **dadurch gekennzeichnet, dass** die erste Gasleitung so mit einer Direktreduktionsanlage (33) verbunden ist, dass die erste Gasleitung ausschließlich mit Topgas (46) aus einem Reduktionsreaktor (18) einer Direktreduktionsanlage versorgt werden kann.

12. Anlage nach einem der Ansprüche 8 bis 11, **dadurch gekennzeichnet, dass** erste und/oder zweite Gasleitung so mit Anlagen (33) zur Roheisenherstellung verbunden sind, dass die Gasleitungen zumindest eines der folgenden Gase enthalten können:
- Topgas aus einem Hochofen, insbesondere aus einem Sauerstoffhochofen mit Topgasrückführung, oder eines Reduktionsschachts (19) einer Schmelzreduktionsanlage
- Abgas aus einem Einschmelzvergaser (23) einer Schmelzreduktionsanlage,
- Abgas aus zumindest einem Wirbelschichtreaktor,
- Abgas aus zumindest einem Festbettreaktor zur Vorwärmung und/oder Reduktion von Eisenoxiden und/oder Eisenbriketts einer Schmelzreduktionsanlage,
- Abgas einer der Anlage zur Roheisenherstellung zugeordneten CO₂-Abscheideanlage,
- Abgas aus zumindest einem Reduktionsreaktor (18) einer Direktreduktionsanlage (33).

13. Anlage nach einem der Ansprüche 9 bis 12, **dadurch gekennzeichnet, dass** eine Dampfleitung eines Abhitzedampferzeugers (6, 7) der Anlage (32) zur Roheisenherstellung in den Umwandlungsreaktor (1) mündet.

14. Anlage nach einem der Ansprüche 8 bis 13, **dadurch gekennzeichnet, dass** ein Sättiger (35), der das Abgas kühlt, vor dem Umwandlungsreaktor (1, 38, 39) angeordnet ist.

## Claims

1. Method for treating waste gases (4) from plants (32, 33) for pig iron production, wherein a first sub-stream (51) of the waste gas following the addition of water and/or water vapour, is subjected to an at least partial conversion of CO into CO₂ and subsequently the waste gas (4) is subjected to CO₂ capture, wherein a second sub-stream (52) of the waste gas is not subjected to a conversion of CO into CO₂, but is subjected to CO₂ capture separately from the first sub-stream (51),
**characterised in that,** following the CO₂ capture in the second sub-stream (52), the product gas (34) is partially used for carburisation and regulation of the carbon content in the product of a direct reduction plant (33), **in that** the product gas (34) is introduced into the cooling gas circuit or above the cooling zone, preferably in the transition zone, of the reducing reactor (18), wherein the product gases (31, 34) following the respective CO₂ capture in the first and second sub-streams (51, 52) are mixed with one another to set a particular ratio of hydrogen to CO, namely a ratio of between 1.5 and 4.5, **in that** part of the product gas (34) following the CO₂ capture in the second sub-stream (52) is mixed with the product gas (31) following the CO₂ capture in the first sub-stream (51) and the product gas (31) - following heating in a reducing gas furnace (43) - is subsequently fed as the reducing gas into the reduction shaft (18) of the direct reduction plant (33).

2. Method according to claim 1, **characterised in that** the tail gas (12) following the CO₂-capture in the second sub-stream (52) is used for combustion, for example, in the reducing gas furnace (43) of a direct reduction plant (33) .

3. Method according to one of claims 1 to 2, **characterised in that** the tail gas (11) following the CO₂ capture in the first sub-stream (51) and the tail gas (12) following the CO₂ capture in the second sub-stream (52) are mixed with one another.

4. Method according to one of claims 1 to 3, **characterised in that** the waste gas (4) contains at least one of the following gases:
- top gas from a blast furnace, in particular from an oxygen blast furnace with top gas recycling or from a reduction shaft (19) of a smelting-reduction plant (32),
- waste gas (29) from a melter gasifier (23) of a smelting-reduction plant,
- waste gas from at least one fluidised reactor,
- waste gas from at least one packed bed reactor for preheating and/or reducing iron oxides and/or iron briquettes of a smelting-reduction plant,
- waste gas from a CO₂ capture system associated with the plant for pig iron production,
- waste gas from at least one reducing reactor (18) of a direct reduction plant (33).

5. Method according to one of claims 1 to 3, **characterised in that** the first sub-stream (51) contains exclusively top gas (46) from a reducing reactor (18) of a direct reduction plant (33).

6. Method according to one of claims 1 to 4, **characterised in that** part of the steam for the conversion of CO into CO₂ is made using waste heat from the plant for pig iron production (32).

7. Method according to one of claims 1 to 4, **characterised in that** part of the steam for the conversion of CO into CO₂ is made using waste heat from the waste gas (4) itself.

8. Plant for carrying out the method according to one of claims 1 to 7, comprising at least
- a plant (32) for pig iron production,
- at least one conversion reactor (1) for converting CO into CO₂,
- a first gas line with which waste gas (4) from the plant for pig iron production can be conducted into the conversion reactor (1),
- a first CO₂ capture system (8) connected downstream of the conversion reactor (1),
wherein a second gas line for waste gas is provided which opens into a second CO₂ capture system (9) independent of the first, without the waste gas first passing through a conversion reactor,
**characterised in that** a line for product gas (34) from the second CO₂ capture system (9) opens into a reducing reactor (18) of a direct reduction plant (33) such that the product gas (34) can be introduced into the cooling gas circuit or above the cooling zone, preferably into the transition zone, of the reducing reactor,
wherein a line for product gas (31) from the first CO₂ capture system (8) opens into a line for product gas (34) from the second CO₂ capture system (9) so that part of the product gas (34) following the CO₂ capture in the second sub-stream (52) is mixed with the product gas (31) following the CO₂ capture in the first sub-stream (51) and the product gas (31) - following heating in a reducing gas furnace (43) - can subsequently be fed as the reducing gas to the reduction shaft (18) of the direct reduction plant (33) .

9. Plant according to claim 8, **characterised in that** a line for tail gas (12) from the second CO₂ capture system (9) opens into a reducing gas furnace (43) of a direct reduction plant (33).

10. Plant according to one of claims 8 to 9, **characterised in that** a line for tail gas (11) from a first CO₂ capture system (8) opens into a line for tail gas (12) from the second CO₂ capture system (9).

11. Plant according to one of claims 8 to 10, **characterised in that** the first gas line is connected to a direct reduction plant (33) such that the first gas line can be supplied exclusively with top gas (46) from a reducing reactor (18) of a direct reduction plant.

12. Plant according to one of claims 8 to 11, **characterised in that** the first and/or second gas line is connected to plants (33) for pig iron production such that the gas lines can contain at least one of the following gases:
- top gas from a blast furnace, in particular from an oxygen blast furnace with top gas recycling or from a reduction shaft (19) of a smelting-reduction plant,
- waste gas from a melter gasifier (23) of a smelting-reduction plant,
- waste gas from at least one fluidised reactor,
- waste gas from at least one packed bed reactor for preheating and/or reducing iron oxides and/or iron briquettes of a smelting-reduction plant,
- waste gas from a CO₂ capture system associated with the plant for pig iron production,
- waste gas from at least one reducing reactor (18) of a direct reduction plant (33).

13. Plant according to one of claims 9 to 12, **characterised in that** a steam line of a waste heat steam generator (6, 7) of the plant (32) for pig iron production opens into the conversion reactor (1).

14. Plant according to one of claims 8 to 13, **characterised in that** a saturator (35) which cools the waste gas or synthesis gas is arranged before the conversion reactor (1, 38, 39).

## Revendications

1. Procédé de traitement de gaz d'échappement (4) produites par des installations (32, 33) de fabrication de fonte brute, un premier flux partiel (51) des gaz d'échappement étant soumis, après ajout d'eau et/ou de vapeur d'eau, à une conversion au moins partielle de CO en CO₂ et les gaz d'échappement (4) étant ensuite soumises à une séparation du CO₂, un second flux partiel (52) des gaz d'échappement n'étant pas soumis à une conversion de CO en CO₂, mais étant soumis séparément du premier flux partiel (51) à une séparation du CO₂, **caractérisé en ce que** le gaz produit (34) après la séparation du CO₂ dans le second flux partiel (52) est utilisé en partie pour la carburation et le réglage de la teneur en carbone dans le produit d'une installation de réduction directe (33), ceci en introduisant le gaz produit (34) dans le circuit de gaz de refroidissement ou au-dessus de la zone de refroidissement, de préférence dans la zone de transition, du réacteur de réduction (18), les gaz produits (31, 34) étant mélangés l'un à l'autre, après la séparation du CO₂ respective dans le premier et le second flux partiel (51, 52), pour ajuster un rapport déterminé H₂/CO, notamment un rapport compris entre 1,5 et 4,5, une partie du gaz produit (34) après la séparation du CO₂ dans le second flux partiel (52) étant pour ce faire mélangée au gaz produit (31) après la séparation du CO₂ dans le premier flux partiel (51), et le gaz produit (31) étant ensuite dirigé, après avoir été chauffé dans un four pour gaz de réduction (43), dans la cheminée de réduction (18) de l'installation de réduction directe (33) pour servir de gaz de réduction.

2. Procédé selon la revendication 1, **caractérisé en ce que** le gaz résiduaire (12) après la séparation du CO₂ dans le second flux partiel (52) est utilisé pour la combustion, à savoir par exemple dans le four pour gaz de réduction (43) d'une installation de réduction directe (33).

3. Procédé selon l'une des revendications 1 à 2, **caractérisé en ce que** le gaz résiduaire (11) après la séparation du CO₂ dans le premier flux partiel (51) et le gaz résiduaire (12) après la séparation du CO₂ dans le second flux partiel (52) sont mélangés l'un à l'autre.

4. Procédé selon l'une des revendications 1 à 3, **caractérisé en ce que** les gaz d'échappement (4) contiennent au moins un des gaz suivantes :
- un gaz de gueulard produit par un haut-fourneau, notamment un haut-fourneau à oxygène avec recyclage du gaz de gueulard, ou émis par une cheminée de réduction (19) d'une installation de réduction-fusion (32),
- un gaz d'échappement (29) produit par un gazéificateur de fusion (23) d'une installation de réduction-fusion,
- un gaz d'échappement émis par au moins un réacteur à combustible fluidisé,
- un gaz d'échappement émis par au moins un réacteur à lit fixe pour le réchauffage et/ou la réduction d'oxydes de fer et/ou de briquettes de fer d'une installation de réduction-fusion,
- un gaz d'échappement d'une installation de séparation du CO₂ associée à l'installation de fabrication de fonte brute,
- un gaz d'échappement émis par au moins un réacteur de réduction (18) d'une installation de réduction directe (33) .

5. Procédé selon l'une des revendications 1 à 3, **caractérisé en ce que** le premier flux partiel (51) contient exclusivement un gaz de gueulard (46) produit par un réacteur de réduction (18) d'une installation de réduction directe (33).

6. Procédé selon l'une des revendications 1 à 4, **caractérisé en ce qu'**une partie de la vapeur pour la conversion de CO en CO₂ est fabriquée avec la chaleur perdue de l'installation de fabrication de fonte brute (32).

7. Procédé selon l'une des revendications 1 à 4, **caractérisé en ce qu'**une partie de la vapeur pour la conversion de CO en CO₂ est fabriquée avec la chaleur perdue des gaz d'échappement (4) eux-mêmes.

8. Installation pour l'exécution du procédé selon l'une des revendications 1 à 7, comprenant au moins
- une installation (32) de fabrication de fonte brute,
- au moins un réacteur de conversion (1) pour la conversion de CO en CO₂,
- une première conduite de gaz grâce à laquelle les gaz d'échappement (4) produits par l'installation de production de fonte brute peuvent être dirigés dans le réacteur de conversion (1),
- une première installation de séparation du CO₂ (8), qui est située en aval du réacteur de conversion (1), une seconde conduite de gaz pour gaz d'échappement, qui débouche dans une seconde installation de séparation du CO₂ (9) indépendante de la première, étant prévue, sans que les gaz d'échappement ne passent auparavant dans un réacteur de conversion,
**caractérisée en ce qu'**une conduite pour un gaz produit (34) de la seconde installation de séparation du CO₂ (9) débouche dans un réacteur de réduction (18) d'une installation de réduction directe (33), de façon que le gaz produit (34) puisse être introduit dans le circuit de gaz de refroidissement ou au-dessus de la zone de refroidissement, de préférence dans la zone de transition, du réacteur de réduction,
une conduite pour le gaz produit (31) de la première installation de séparation du CO₂ (8) débouchant dans une conduite pour le gaz produit (34) de la seconde installation de séparation du CO₂ (9), de façon qu'une partie du gaz produit (34) après la séparation du CO₂ dans le second flux partiel (52) soit mélangée au gaz produit (31) après la séparation du CO₂ dans le premier flux partiel (51) et que le gaz produit (31) puisse être dirigé ensuite, après avoir été chauffé dans un four pour gaz de réduction (43), dans la cheminée de réduction (18) de l'installation de réduction directe (33) pour servir de gaz de réduction.

9. Installation selon la revendication 8, **caractérisée en ce qu'**une conduite pour un gaz résiduaire (12) émis par la seconde installation de séparation du CO₂ (9) débouche dans un four pour gaz de réduction (43) d'une installation de réduction directe (33).

10. Installation selon l'une des revendications 8 à 9, **caractérisée en ce qu'**une conduite pour un gaz résiduaire (11) d'une première installation de séparation du CO₂ (8) débouche dans une conduite pour un gaz résiduaire (12) de la seconde installation de séparation du CO₂ (9).

11. Installation selon l'une des revendications 8 à 10, **caractérisée en ce que** la première conduite de gaz est reliée à une installation de réduction directe (33) de façon que la première conduite de gaz puisse être alimentée exclusivement avec un gaz de gueulard (46) produit par un réacteur de réduction (18) d'une installation de réduction directe.

12. Installation selon l'une des revendications 8 à 11, **caractérisée en ce que** les première et/ou seconde conduites de gaz sont reliées à des installations (33) de fabrication de fonte brute de façon que les conduites de gaz puissent contenir au moins un des gaz suivantes :
- un gaz d'échappement de gueulard produit par un haut-fourneau, notamment un haut-fourneau à oxygène avec recyclage du gaz de gueulard, ou émis par une cheminée de réduction (19) d'une installation de réduction-fusion,
- un gaz d'échappement produit par un gazéificateur de fusion (23) d'une installation de réduction-fusion,
- un gaz d'échappement émis par au moins un réacteur à combustible fluidisé,
- un gaz d'échappement émis par au moins un réacteur à lit fixe pour le réchauffage et/ou la réduction d'oxydes de fer et/ou de briquettes de fer d'une installation de réduction-fusion,
- un gaz d'échappement d'une installation de séparation du CO₂ associée à l'installation de fabrication de fonte brute,
- un gaz d'échappement émis par au moins un réacteur de réduction (18) d'une installation de réduction directe (33) .

13. Installation selon l'une des revendications 9 à 12, **caractérisée en ce qu'**une conduite de vapeur d'un générateur de vapeur de récupération de chaleur (6, 7) de l'installation (32) de fabrication de fonte brute débouche dans le réacteur de conversion (1).

14. Installation selon l'une des revendications 8 à 13, **caractérisée en ce qu'**un saturateur (35) qui refroidit les gaz d'échappement est situé en amont du réacteur de conversion (1, 38, 39).
